# EUROPÄISCHE PATENTSCHRIFT

(11) **EP 3 917 992 B1**
(45) Veröffentlichungstag und Bekanntmachung des Hinweises auf die Patenterteilung: **02.04.2025**
(21) Anmeldenummer: 20700904.4
(22) Anmeldetag: 15.01.2020
(51) Int. Cl.: C08G 77/58, C09D 183/14, C09D 4/00

(54) **DOTIERTE ALKALISILIKAT-SCHUTZSCHICHTEN AUF METALL**
DOPED ALKALI SILICATE PROTECTIVE LAYERS ON METAL
COUCHES PROTECTRICES DE SILICATE ALCALIN DOPÉES SUR UN MÉTAL

(30) Priorität: 29.01.2019 DE 102019102202
(43) Veröffentlichungstag der Anmeldung: 08.12.2021
(73) Patentinhaber: EPG (Engineered nanoProducts Germany) AG, 64347 Griesheim (DE)
(72) Erfinder: ENDRES, Klaus, 66424 Homburg (DE); KUTZKY, Barbara, 66123 Saarbrücken (DE); PERRE, Emilie, 57430 Willerwald (FR); DEMBSKI, Thomas, 57470 Guenviller (FR)
(74) Vertreter: Meissner Bolte Partnerschaft mbB
(86) Internationale Anmeldenummer: PCT/EP2020/050935
(87) Internationale Veröffentlichungsnummer: WO 2020/156815

(56) Entgegenhaltungen:
- WO-A2-2006/077124

## Beschreibung

Die Erfindung betrifft eine glasartige Schutzschicht, die als Korrosionsschutzschicht auf korrosionsanfälligen Substraten, insbesondere korrodierenden Metallen, Legierungen und anderen Werkstoffen, wie Gläsern, insbesondere auf Stahl und Leichtmetallen wie Aluminium und Titan als Grundbeschichtung oder als Deckschicht geeignet ist, sowie das Verfahren zu ihrer Herstellung und die Verwendung auf metallischen Substraten zum Schutz gegen Korrosion und im speziellen zur Verwendung als Anlaufschutz.

Glasartige, unter alkalischen Bedingungen hergestellte Sol-Gel-Beschichtungen sind im Stand der Technik bekannt und eignen sich als Beschichtungsmaterial für den Korrosionsschutz von leicht korrodierenden Metallen. Insbesondere bei metallischen Werkstoffen, die in Ihrem Anwendungsbereich hohen Temperaturen und korrosiven Medien ausgesetzt sind, zeigten sich glasartige Schichten als geeignete Komponenten zum Schutz vor Korrosion.

Auch Glassubstrate sind korrosionsanfällig, da sie gegen Auslaugung und hydrolytische Zersetzung anfällig sind.

Aus DE 19714949 A1 und DE 10059487 A1 sind glasartige Schichten bekannt, die aus alkalihaltigen Beschichtungssolen erhalten werden. Diese Materialien führen nach Verdichtung bei Temperaturen bis 500°C zu transparenten, rissfreien und auch eindimensional biegbaren Schichten.

Die im Stand der Technik beschriebenen reinen Alkalisilikatschichten müssen bei Temperaturen bis zu 500°C gehärtet werden, da bei geringeren Einbrenntemperaturen Performanceverluste, d.h. geringere Beständigkeit gegen Chemikalien, geringe Antihafteigenschaften und geringere Beständigkeit in Lebensmitteleinbrandtests auftreten. Außerdem neigen diese Schichten häufig zur Rissbildung während des Abkühlprozesses.

Das Dokument DE 197 14 949 A1 betrifft ein Konsolidierungsmittel, das als Beschichtung auf z.B. Glas oder Metall verwendet werden kann. Im Beispiel 2 werden MTEOS, TEOS, PTEOS und Titantetraisopropoxid verwendet. Die Hydrolyse/Kondensation wird durch konzentrierte Salzsäure katalysiert.

Ziel der vorliegenden Erfindung war es, Schutzschichten für Metalle und Gläser zur Verfügung zu stellen, die oben beschriebene Nachteile nicht zeigen und als Einschichter appliziert werden können. Insbesondere bestand die Aufgabe in der Bereitstellung von Schutzschichten für Metalle oder Gläser, insbesondere für den Korrosionsschutz, bei denen Rissbildung weitgehend vermieden wird und die bei relativ niedrigen Temperaturen gehärtet werden können. Desweiteren sollen gute bzw. verbesserte Chemikalienbeständigkeit, Antihafteigenschaften, Anlaufschutz und Beständigkeit in Lebensmitteleinbrandtests der Schutzschichten erreicht werden. Gleichzeitig sollte eine hinreichend lange Topfzeit und Verarbeitungszeit erhalten werden.

Überraschenderweise wurde gefunden, dass durch Zusatz geringer Mengen an bestimmten Metall- oder Borverbindungen, insbesondere Ti-Alkoxiden, zu hydrolysierten Vorstufen von Natrium-Kalium-Silicaten in einem bestimmten Verhältnis die gewünschten Eigenschaften erzielt werden können.

Dementsprechend betrifft die Erfindung ein Verfahren zur Herstellung einer glasartigen Schutzschicht auf einem Metall- oder Glassubstrat gemäß Anspruch **1,** das hergestellte beschichtete Substrat gemäß Anspruch 17 und die entsprechende Verwendung gemäß Anspruch 18. Bevorzugte Ausführungsformen sind in den abhängigen Ansprüchen dargestellt.

Durch das erfindungsgemäße Verfahren können bereits bei Verdichtungstemperaturen im Bereich von 350 °C sehr gute Korrosionsschutz- und Antihafteigenschaften erzielt werden. Es werden rissfreie Schichten erhalten. Ebenso wurde überraschenderweise festgestellt, dass die Haftung und der Korrosionsschutz von mit Pigmenten gefärbten erfindungsgemäßen Beschichtungssolen deutlich besser ist als bei Systemen nach dem Stand der Technik.

Zudem besitzen die erfindungsgemäßen Beschichtungszusammensetzungen eine Topfzeit, die es ermöglicht, diese Systeme hinreichend lange zu lagern. Somit sind die Systeme für eine industrielle Sprühapplikation im Gegensatz zu den literaturbekannten Ti-haltigen Heterokondensaten geeignet. Vorteilhaft ist auch, dass der Schutz durch einen Einschichter, d.h. eine einzelne Schicht erreicht wird. Im Stand der Technik werden häufig Doppelschicht-Systeme benötigt.

Im Folgenden wird die Erfindung im Einzelnen erläutert.

Die Erfindung betrifft ein Verfahren zur Herstellung einer glasartigen Schutzschicht auf einem Metall- oder Glassubstrat oder einem vorbeschichteten Metall- oder Glassubstrat, umfassend
a) Mischen von einer oder mehreren Siliciumverbindungen der Formel (I)

   RₙSiX₄₋ₙ (I)

   worin R unabhängig Alkyl, Aryl, Alkaryl oder Arylalkyl ist, X unabhängig Alkoxy oder Acyloxy ist und n 0, 1 oder 2 ist, mit der Maßgabe, dass mindestens eine Siliciumverbindung der Formel (I) eingesetzt wird, worin n 1 oder 2 ist, mit NaOH und KOH,
b) Zugabe von Wasser zu der in Schritt a) erhaltenen Mischung zur Hydrolyse des oder der Siliciumverbindungen der Formel (I),
c) Zugabe von mindestens einer Verbindung der Formel (II)

   MYₘ (II)

   worin M Pb, Ti, Zr, Al oder B, vorzugsweise Ti, ist, Y unabhängig Alkoxy ist und m der Wertigkeit von M entspricht, wobei eine oder mehr Alkoxygruppen durch einen oder mehr Chelatbildner ersetzt sein können, zu der in Schritt b) erhaltenen hydrolysierten Mischung, wobei das molare Verhältnis M/Si im Bereich von 0,01/1 bis 0,04/1 liegt, wobei M die molare Menge an M in der mindestens einen Verbindung der Formel (II) ist und Si die molare Menge an Si in der mindestens einen Siliciumverbindung der Formel (I) ist, um ein Beschichtungssol zu erhalten,
d) Aufbringen des in Schritt c) erhaltenen Beschichtungssols auf das Metall- oder Glassubstrat oder das vorbeschichtete Metall- oder Glassubstrat und
e) thermisches Verdichten des in Schritt d) aufgebrachten Beschichtungssols bei einer Temperatur im Bereich von 300 °C bis 500 °C unter Bildung der glasartigen Schutzschicht.

In Schritt a) des erfindungsgemäßen Verfahrens werden eine oder mehreren Siliciumverbindungen mit NaOH und KOH gemischt. Die eine oder mehreren Siliciumverbindungen weisen die folgende Formel (I) auf

RₙSiX₄₋ₙ (I)

worin R unabhängig Alkyl, Aryl, Alkaryl oder Arylalkyl ist, X unabhängig Alkoxy oder Acyloxy ist und n 0, 1 oder 2 ist, mit der Maßgabe, dass mindestens eine Siliciumverbindung der Formel (I) eingesetzt wird, worin n 1 oder 2 ist.

In der Siliciumverbindung der Formel (I) ist die Gruppe R bevorzugt aus C₁₋₄-Alkyl, insbesondere Methyl oder Ethyl, oder Phenyl ausgewählt. Die Gruppe X ist bevorzugt aus C₁₋₄-Alkoxy, insbesondere Methoxy oder Ethoxy, ausgewählt.

In einer bevorzugten Ausführungsform werden als die eine oder die mehreren Siliciumverbindungen der Formel (I) mindestens eine Siliciumverbindung der Formel (I), worin n 1 oder 2, bevorzugt 1, ist, und mindestens eine Siliciumverbindung der Formel (I), worin n 0 ist, eingesetzt, wobei das molare Verhältnis der mindestens einen Siliciumverbindung der Formel (I), worin n 1 oder 2 ist, zu der mindestens einen Siliciumverbindung der Formel (I), worin n 0 ist, bevorzugt im Bereich von 1 bis 10, bevorzugt von 3 bis 5, liegt. Bei diesen bevorzugten molaren Verhältnissen ergeben sich Schichten, die eine besonders geignete Flexibilität aufweisen und sich rissfrei aushärten lassen.

Beispiele für Siliciumverbindungen der Formel (I) sind Si(OCH₃)₄, Si(OC₂H₅)₄, Si(O-n- oder i-C₃H₇)₄, Si(OC₄H₉)₄, Si(OOCC₃H)₄, Methyltri(m)ethoxysilan ((m)ethoxy bedeutet Methoxy oder Ethoxy), Methyltripropoxysilan, Ethyltri(m)ethoxysilan, Phenyltri(m)ethoxysilan, Dimethyldi(m)ethoxysilan und Diphenyldi(m)ethoxysilan. Von diesen Silanen sind Tetramethoxysilan und Tetraethoxysilan (TEOS) (n = 0) und Methyltriethoxysilan (MTEOS) (n = 1) besonders bevorzugt. Die Siliciumverbindungen der Formel (I) sind besonders bevorzugt eine Kombination von TEOS und MTEOS, insbesondere in den vorstehend angegebenen molaren Verhältnissen.

Die eine oder mehreren Siliciumverbindungen der Formel (I) werden mit NaOH und KOH gemischt. Das Natriumhydroxid und das Kaliumhydroxid werden dabei gewöhnlich jeweils in fester Form zugegeben. Das Mischen kann z.B. durch Rühren unterstützt werden. Zweckmäßigerweise wird gerührt, bis das NaOH und das KOH sich in der oder den Siliciumverbindungen der Formel (I) gelöst haben.

NaOH und KOH katalysieren nach der in Schritt b) erfolgten Zugabe von Wasser die Hydrolyse und Kondensation der Siliciumverbindungen der Formel (I) (basische Katalyse). Es zeigte sich, dass durch den Einsatz von Kaliumhydroxid und Natriumhydroxid in Kombination eine besonders dichte und rissfreie Schicht erhalten wird. Durch den Zusatz der Kondensationskatalysatoren wird eine stärkere Verdichtung des anorganischen Netzwerkes erreicht.

Das Molverhältnis von NaOH zu KOH liegt z.B. im Bereich von 0,5 bis 1,5, bevorzugt 0,8 bis 1,2.

Das molare Verhältnis Si/(Na+K) liegt für die Erzielung besonders dichter und rissfreier Schichten bevorzugt im Bereich von 20 bis 7, bevorzugter von 15 bis 10, wobei Si die molare Menge an Si in der mindestens einen Siliciumverbindung der Formel (I) ist und (Na+K) die molare Gesamtmenge an Na und K in NaOH und KOH ist.

Gemäß Schritt b) wird Wasser zu der in Schritt a) erhaltenen Mischung zur Hydrolyse des oder der Siliciumverbindungen der Formel (I) zugegeben. Wie bereits ausgeführt, katalysieren die Basen KOH und NaOH die Hydrolyse der Siliciumverbindungen. Die hydrolysierten Siliciumverbindungen können gegebenenfalls bereits teilweise miteinander kondensieren. Es kann sich somit ein Sol bilden, das hydrolysierte monomere Siliciumverbindungen und Na/K-Silikat-Cluster enthält.

Die Hydrolyse der Siliciumverbindungen der Formel (I) erfolgt nach dem bekannten Sol-Gel-Verfahren. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Die Menge an in Schritt b) zugegebenem Wasser liegt z.B. im Bereich von 0,2 bis 0,5 mol, bevorzugt von 0,3 bis 0,4 mol, pro mol an hydrolysierbaren Gruppen, die in der oder den Siliciumverbindungen der Formel (I) vorhanden sind. Liegt die Menge an Wasser > 0,5 mol kann die Mischung gelieren. Bei Mengen an Wasser < 0,2 mol können sich Risse in der Schicht ergeben.

Bei der Zugabe von Wasser beginnt die exotherme Hydrolysereaktion, was zu einer Erwärmung der Mischung führt. In einer bevorzugten Ausführungsform der Erfindung erfolgt die Zugabe des Wassers in Schritt b) so, dass die Temperatur der Mischung 40 °C nicht überschreitet, bevorzugt 36 °C nicht überschreitet. Dies kann z.B. dadurch erreicht werden, dass das Wasser langsam zugetropft oder portionsweise zugegeben wird.

Es ist ferner bevorzugt, wenn man die durch die Hydrolysereaktion erwärmte Mischung nach der Zugabe des Wassers auf eine Temperatur im Bereich von 15 bis 25 °C abkühlen lässt und gegebenenfalls mit einem organischen Lösungsmittel verdünnt, bevor gemäß Schritt c) mindestens eine Verbindung der Formel (II) zugegeben wird.

In Schritt c) wird zu der in Schritt b) erhaltenen hydrolysierten Mischung mindestens eine Verbindung der Formel (II)

MYₘ (II)

zugegeben, wobei M Pb, Ti, Zr, Al oder B, vorzugsweise Ti, ist, Y unabhängig Alkoxy, bevorzugt C₁₋₈-Alkoxy, insbesondere C₁₋₄-Alkoxy, ist und m der Wertigkeit von M entspricht, wobei m z.B. 2, 3 oder 4 sein kann, wobei eine oder mehr Alkoxygruppen durch einen oder mehr Chelatbildner ersetzt sein können und/oder zwei Alkoxygruppen durch eine Oxogruppe (=O) ersetzt sein können. Für M = Ti oder Zr ist m gewöhnlich 4. Für M = Al oder B ist m gewöhnlich 3, wobei die Verbindung als Addukt, z.B. mit einer Lewis-Base, vorliegen kann. Für M = Pb ist m gewöhnlich 2. Es werden bevorzugt keine Alkoxygruppen durch Chelatbildner ersetzt, d.h. in der Verbindung der Formel (II) ist Y jeweils eine Alkoxygruppe.

Beispiele für geeignete Chelatbildner sind Carboxylate, z.B. Acetat, Acrylat und Methacrylat, ß-Diketonate, z.B. Acetylacetonate, und Aminoalkoholate, z.B. das Alkoholat von Triethanolamin. Jeweils ein Chelatbildner kann z.B. jeweils eine oder zwei, bevorzugt eine, Alkoxygruppe ersetzen. In der Verbindung der Formel (II) können alle Alkoxygruppen durch Chelatbildner ersetzt sein, es ist aber bevorzugt, dass mindestens ein, bevorzugt mindestens zwei Alkoxygruppen in der Verbindung der Formel (II) enthalten sind.

Besonders bevorzugt ist die Verbindung der Formel (II) eine Verbindung der Formel (II), worin Y Alkoxy ist, insbesondere ein Tetraalkoxytitan, wobei das Alkoxy bevorzugt C₁₋₈-Alkoxy, insbesondere C₁₋₄-Alkoxy, ist.

Geeignete Verbindungen der Formel (II) sind z.B. Ti(OC₂H₅)₄, Ti(O-n- oder i-C₃H₇)₄, Ti(OC₄H₉)₄, Diisopropoxybis(ethylacetoacetato)titanat, Poly(dibutyltitanat), Titan-2-ethylhexoxid, Titanbis(triethanolamin)diisopropoxid, Al(OC₂H₅)₃, Al(O-sek.-C₄H₉)₃, Zr(OC₃H₇)₄, Zirconium-2-ethylhexoxid, B(OCH₃)₃, Zr(OC₃H₇)₂(OOC(CH₃)=CH₂)₂, Titanacetylacetonat, Titanoxidbis(pentandionat), Ti(OC₃H₇)₃(OOC(CH₃)=CH₂) und Ti(OC₂H₄)₃(allylacetoacetat), Bleiacetat und Bleidiisopropoxid.

Das molare Verhältnis M/Si liegt im Bereich von 0,01/1 bis 0,04/1, wobei M die molare Menge an M in der mindestens einen Verbindung der Formel (II) ist und Si die molare Menge an Si in der mindestens einen Siliciumverbindung der Formel (I) ist. Das molare Verhältnis M/Si liegt bevorzugt im Bereich von 0,015/1 bis 0,35/1, bevorzugter von 0,02/1 bis 0,03/1, noch bevorzugter 0,021/1 bis 0,03/1. Durch die angegebene Einstellung des molare Verhältnis M/Si wird insbesondere eine verringerte Rissbildung in den erhaltenen Schutzschichten erreicht.

Nach der Zugabe der mindestens einen Verbindung der Formel (II) wird ein Beschichtungssol erhalten. Durch das erfindungsgemäße Verfahren kann eine relativ gleichmäßige Verteilung der M-Atome der Verbindung der Formel (II) in dem Alkalisilkatsol erreicht werden. Ohne sich an eine Theorie binden zu wollen, wird davon ausgegangen, dass das erhaltene Beschichtungssol gewöhnlich mit den M-Atomen, bevorzugt Ti, dotiertes Alkalisilikat von Na und K umfasst, wobei es sich insbesondere um ein vorkondensiertes schichtbildendes Sol handelt, das Monomereinheiten und mit den M-Atomen, insbesondere Ti, dotierte Alkalisilikat-Cluster enthält.

Durch die Zugabe der Verbindung der Formel (II) gemäß Schritt c) werden die Hydrolyse- und Polykondensationsprodukte der Siliciumverbindung(en) der Formel (I) mit der Verbindung der Formel (II) co-kondensiert. Dies zeigte einen positiven Effekt auf die resultierenden Schichteigenschaften wie später erläutert, insbesondere bei Verwendung einer Verbindung der Formel (II) mit M = Ti, insbesondere Titantetraalkoxiden.

Die Zugabe der Verbindung der Formel (II), insbesondere der Bor- oder Metallalkoxide der Formel (II) mit M = Pb, Ti, Zr, Al oder B, bevorzugt Ti, zeichnet sich dadurch aus, dass die Verbindung der Formel (II) bzw. das Alkoxid dem System ohne Stabilisatoren hinzugegeben werden kann.

Stabilisatoren, welche einen stabilisierenden Effekt auf die Verbindung der Formel (II) haben, sind bekannt und können gegebenenfalls zugesetzt werden. Vorzugsweise werden hier chelatbildende Liganden zum Einsatz gebracht. Als Chelatbildner eignen sich z.B. die vorstehend genannten Beispiele für Chelatbildner. Es ist aber bevorzugt und ein besonderer Vorteil der vorliegenden Erfindung, dass dem Beschichtungssol keine Stabilisatoren und insbesondere keine Chelatbildner zugesetzt werden müssen.

**Dem Beschichtungssol** oder einer Vorstufe davon kann ferner mindestens ein Pigment, bevorzugt ein farbgebendes Pigment, zugesetzt werden. Es wurde überraschenderweise festgestellt, dass bei den erfindungsgemäß hergestellten Beschichtungssolen, die farbgebende Pigmente enthalten, eine sehr gute Haftung der Schutzschicht und guter Korrosionsschutz erhalten wird. Bei den Farbpigmenten kann es sich um übliche, im Handel erhältliche Pigmente handeln, z.B. organische oder anorganische Pigmentpasten und -pulver, z.B. Pigmente auf Basis von Ruß (z.B. Printex^{®} 90) oder Graphit (z.B. TIMREX^{®} KS), Azofarbstoffe, Pigmente auf Basis von Titandioxid (z.B. Kronos^{®} 2360), Eisenoxid (z.B. Bayferrox^{®} 318 M) oder Spinell (z.B. Sherpherd^{®} 30C365). Weitere Möglichkeiten sind metallische Pigmente, z.B. auf der Basis von Eisen (z.B. Stapa Ta Ferricon^{®} 200), Zink (z.B. Stapa^{®} Zinc Paste) oder Aluminium (z.B. Stapa Hydrolan S^{®}), Aluminiumpigmente oder Perlglanzpigmente (z.B. Iriodin^{®} von Merck).

Gemäß Schritt d) wird das in Schritt c) erhaltene Beschichtungssol auf ein Metall- oder Glassubstrat oder ein vorbeschichtetes Metall- oder Glassubstrat aufgebracht. Das erhaltene Beschichtungssol wird bevorzugt auf ein Metallsubstrat oder ein vorbeschichtetes Metallsubstrat aufgebracht.

Zur Einstellung einer für die Aufbringung geeigneten Viskosität kann, wenn benötigt, das Beschichtungssol gegebenenfalls mit einem oder mehreren Lösungsmitteln, insbesondere organischen Lösungsmitteln, verdünnt werden. Zum Verdünnen der Beschichtungssole eignen sich insbesondere Ethanol, Isopropanol, Butanol und deren Isomere. Weitere Beispiel für geeignete Lösungsmittel sind Amylalkohol, Hexanol oder Ether. Die Verdünnung kann durch ein Lösungsmittel oder eine Kombination von Lösungsmitteln eingestellt werden.

Das Metallsubstrat ist vorzugsweise ausgewählt aus einem Substrat aus Stahl, insbesondere Edelstahl oder austenitischem Stahl, Aluminium, Aluminiumlegierung, Titan, Titanlegierung, Magnesium oder Magnesiumlegierung.

Das Metallsubstrat kann mit einer Vorbeschichtung versehen sein, z.B. einer Emailleschicht oder einer Grundierung.

Das Glassubstrat ist bevorzugt ausgewählt aus einem Substrat aus Natronkalkglas, Borosilicatglas, Bleikristall und Kieselglas. Es kann sich z.B. um Flachglas, Hohlglas wie Behälterglas, oder um Laborgeräteglas handeln. Das Glassubstrat kann gegebenenfalls eine Vorbeschichtung aufweisen, z.B. eine Emailleschicht.

Das Beschichtungssol kann durch übliche Beschichtungsverfahren auf das Metall- oder Glassubstrat oder das vorbeschichtete Metall- oder Glassubstrat aufgebracht werden, z.B. durch Sprühbeschichtung, elektrostatisches Sprühen, Tauchbeschichtung, Schleuderbeschichtung (Spin Coating) oder Coil Coating. Bevorzugt ist ein Sprühverfahren. Das aufgebrachte Beschichtungssol kann gegebenenfalls einer Trocknung unterworfen werden.

Gemäß Schritt e) wird das in Schritt d) aufgebrachte Beschichtungssol bei einer Temperatur im Bereich von 300 °C bis 500 °C unter Bildung der glasartigen Schutzschicht thermisch verdichtet bzw. gehärtet. Die Einbrenntemperatur zur thermischen Verdichtung liegt bei Temperaturen bis zu 500 °C, insbesondere 300 °C bis 475 °C und besonders bevorzugt bei 350 °C bis 425 °C, noch bevorzugter 350 °C bis 375 °C. Ein besonderer Vorteil des erfindungsgemäßen Verfahrens besteht darin, dass die Beschichtungssole bei niedrigen Temperaturen zu rissfreien Schichten verdichtet bzw. gehärtet werden können und die guten Eigenschaften, wie z.B. Beständigkeit gegen Chemikalien und Antihafteigenschaften, erhalten bleiben. Durch eine niedrigere Temperatur kann auch eine mögliche Verfärbung reduziert werden.

Die Erwärmung des aufgebrachten Beschichtungssols zur thermischen Verdichtung bzw. Härtung kann z.B. durch Wärmekonvektion und durch Bestrahlung mit NIR-Strahlung erfolgen.

Die thermische Verdichtung kann z.B. einstufig oder zweistufig durchgeführt werden, wobei auch drei- oder höherstufige Verdichtungen denkbar sind. Eine einstufige thermische Verdichtung kann z.B. unter einer bestimmten Atmosphäre durchgeführt werden, z.B. bei einer Atmosphäre mit einem Sauerstoffgehalt von mindestens 1 Vol.-%, wie z.B. an Luft, oder in einer Inertgasatmosphäre (Sauerstoffgehalt vorzugsweise unter 1000 ppm). Während einer zweistufigen thermischen Verdichtung erfolgt die thermische Verdichtung bei zwei verschiedenen Atmosphären, z.B. in einer ersten Stufe bei relativ niedrigen Temperaturen in einer sauerstoffhaltigen Atmosphäre und einer anschließenden zweiten Stufe bei relativ hohen Temperaturen in einer weitgehend sauerstofffreien Atmosphäre.

Ein zweistufiges Verdichtungsverfahren kann gegenüber der einstufigen Verdichtung vorteilhaft sein, um bei Metall- oder Glassubstraten, insbesondere Metallsubstraten, die empfindlich für ein Anlaufen sind, wie z.B. Stahl, insbesondere Edelstahl, eine Reduzierung der Anlauffarbe zu erreichen.

In einer speziellen Ausführungsform kann die thermische Verdichtung zweistufig durchgeführt werden, wobei das aufgebrachte Beschichtungssol zunächst in einer Atmosphäre mit einem Sauerstoffgehalt von mindestens 1 Vol.-%, z.B. Luft, auf eine Temperatur in einem Bereich von 150 bis 200 °C erwärmt wird und anschließend in einer Inertgasatmosphäre auf eine Temperatur im Bereich von 300 °C bis 500 °C, insbesondere 300 °C bis 475 °C, besonders bevorzugt bei 350 °C bis 425 °C, noch bevorzugter 350 °C bis 375 °C, erwärmt wird, wobei der Sauerstoffgehalt der Inertgasatmosphäre vorzugsweise unter 1000 ppm, bevorzugter unter 800 ppm, liegt.

Die glasartige Schutzschicht bildet bevorzugt eine Grundbeschichtung oder eine Deckschicht auf dem Metall- oder Glassubstrat. In einer Ausführungsform kann die glasartige Schutzschicht als einzige Beschichtung auf dem Metall- oder Glassubstrat oder auf einem mit einer Emailleschicht vorbeschichteten Metall- oder Glassubstrat aufgebracht werden. In einer anderen Ausführungsform kann neben der glasartigen Schutzschicht eine oder mehrere weitere Beschichtungen auf dem Metall- oder Glassubstrat oder auf einem mit einer Emailleschicht vorbeschichteten Metall- oder Glassubstrat aufgebracht werden, wobei in diesem Fall die glasartige Schutzschicht bevorzugt die Grundschicht oder die Deckschicht ist.

Übliche Schutzschichten auf Basis des Sol-Gel-Verfahrens weisen häufig ein Doppelschichtsystem aus Sol-Gel-Schichten auf. Ein Vorteil des Verfahrens besteht darin, dass die erfindungsgemäß nach dem Sol-Gel-Verfahren hergestellte Schutzschicht als Einschichter ausreichend Schutz für das Metall- oder Glassubstrat bietet, so dass eine zweite nach dem Sol-Gel-Verfahren hergestellte Schicht nicht erforderlich ist. In einer bevorzugten Ausführungsform des erfindungsgemäßen Verfahrens wird unmittelbar über und unter der glasartigen Schutzschicht keine Beschichtung mit einer nach dem Sol-Gel-Verfahren hergestellten Beschichtungszusammensetzung (d.h. Sol-Gel-Schicht) aufgebracht. Besonders bevorzugt wird in dem erfindungsgemäßen Verfahren außer der beschriebenen glasartigen Schutzschicht keine weitere Beschichtung mit einer nach dem Sol-Gel-Verfahren hergestellten Beschichtungszusammensetzung (d.h. Sol-Gel-Schicht) auf dem Metall- oder Glassubstrat aufgebracht.

Ohne sich an eine Theorie binden zu wollen, wird davon ausgegangen, dass es sich bei der gebildeten Schutzschicht bzw. Korrosionsschutzschicht insbesondere um eine Alkalisilikatschicht handelt, die durch die Verbindung der Formel (II), bevorzugt Titanalkoxiden, dotiert worden ist, wobei die Alkalisilikatschicht aus den vorkondensierten und für die Schichtbildung verantwortliche Siliciumverbindungen der Formel (I) als Präkursoren gebildet wird.

Die Schichtdicke der glasartigen Schutzschicht nach der thermischen Verdichtung kann z.B. im Bereich von 2 bis 10 µm, bevorzugt von 4 bis 8 µm, liegen. Die glasartige Schutzschicht ist vorzugsweise im Wesentlichen anorganisch. Die nichtflüchtigen organischen Komponenten bzw. Gruppen im Beschichtungssol werden bei der thermischen Verdichtung bevorzugt zumindest größtenteils ausgebrannt.

Die Erfindung betrifft ferner ein Metall- oder Glassubstrat mit einer glasartigen Schutzschicht, erhältlich nach dem vorstehend beschriebenen erfindungsgemäßen Verfahren. Alle vorstehend für das erfindungsgemäße Verfahren beschriebenen Merkmale und Ausführungsformen gelten entsprechend für das erfindungsgemäße Metall- oder Glassubstrat.

Die Erfindung betrifft auch die Verwendung der nach dem erfindungsgemäßen Verfahren erhaltenen glasartigen Schutzschicht als Korrosionsschutzschicht und/oder als Antifingerprintschicht und/oder als Antihaftschicht auf einem Metall- oder Glassubstrat.

Konkrete Beispiele für die Verwendung der erfindungsgemäßen Beschichtungslösung auf verschiedenen Substraten werden im Folgenden angegeben.

### Antihafteigenschaften auf emaillierten Oberflächen

Emaillierte Oberflächen kommen u. a. auf Backblechen und Ofenmuffeln zum Einsatz. Für derartige Anwendungen müssen die emaillierten Oberflächen bestimmte mechanische Eigenschaften erfüllen und chemische Resistenz gegenüber Reinigungsmitteln und bestimmten Lebensmitteln besitzen. Besonders problematisch ist hier die Anhaftung von eingebrannten Standardlebensmitteln, die durch Lebensmitteleinbrandtest geprüft wird.

Versuche zu den Antihafteigenschaften der erfindungsgemäß hergestellten Schutzschicht wurden durchgeführt. Diese sind nachstehend in Beispiel 4 wiedergegeben. Hier zeigt sich der Vorteil der erfindungsgemäß hergestellten glasartigen Schuzschichten als Überbeschichtung gegenüber Schichten, die mit Solen aus dem Stand der Technik hergestellt werden.

Wie überraschenderweise festgestellt wurde, sind die nach dem erfindungsgemäßen Verfahren hergestellten Beschichtungssole, insbesondere die Titan-haltigen Beschichtungssole zur Überbeschichtung von Emaille sehr gut geeignet. Im Vergleich zu der reinen Emailleschicht zeichnet sich die Überbeschichtung nach dem erfindungsmäßigen Verfahren durch eine reduzierte Oberflächenenergie aus, wodurch die guten Antihafteigenschaften der erfindungsgemäßen Schutzschicht begründet sind. Vergleichende Untersuchungen beim Lebensmitteleinbrandtest ergaben, dass die Überbeschichtung der Emailleschicht mit einem Sol nach dem Stand der Technik zu keiner Verbesserung in der Beständigkeit führt.

### Pigmentierte Zusammensetzungen

In dem nachstehend beschriebenen Beispiel 5 werden temperaturbelastete Bauteile (z. B. für den Automobilbereich) aus Edelstahl 1.4301 mit einem Sol-Gel-System des Standes der Technik beschichtet, welches Aluminiumpigmente als farbgebendes Mittel enthält. Nach thermischer Aushärtung zeigte sich allerdings, dass sich diese Schichten unter bestimmten Bedingungen lokal ablösen. Diese lokalen Defekte treten besonders im Bereich von umgeformten Flächen auf, d.h. in Bereichen, in denen starke mechanische Kräfte zur Umformung eingesetzt wurden.

Der Stahl 1.4301 ist ein austenitischer, korrosionsbeständigen Stahl, der nicht ferromagnetisch ist. Die chemische Zusammensetzung ist aber so vorgegeben, dass 10 % - 40 % des Gefüges aus Ferrit bzw. Martensit bestehen können. Insbesondere durch eine Kaltumformung können Teile des Austenits mechanisch induziert in Martensit umwandeln. Der so gebildete "Umformungsmartensit" besitzt dann andere thermische und mechanische Eigenschaften als der umgebende Austenit. Die elektrochemische Beständigkeit des martensitischen Gefüges ist in der Regel niedriger als die des Austenits. Durch die Wärmebehandlung nach dem Aufbringen der Sol-Gel-Schicht würde der mechanisch induziert erzeugte Martensit angelassen, so dass nach der Wärmebehandlung ein Mischgefüge aus Austenit und "Vergütungsgefüge" vorliegen sollte.

Da bei den oben beschriebenen Bauteilen die Schichtablösung immer in stark plastisch umgeformten Bereichen auftrat, die dann auch magnetisch sind, ist es naheliegend, dass in diesen Bereichen das Gefüge teilweise aus Martensit, der mechanisch induziert aus Austenit entstanden ist, bzw. aus Vergütungsgefüge besteht. Das nach der Beschichtung der umgeformten Edelstahlbauteile verzögert auftretende Schichtabplatzen könnte somit durch eine lokale Korrosion verursacht sein, die an martensitischen Stellen unterhalb der Sol-Gel-Schicht bevorzugt in Kantennähe beginnt. Nach ersten Abplatzungen schreitet die Korrosion dann als Schichtkorrosion weiter voran und löst nach und nach immer neue Bereiche der Sol-Gel-Schicht ab.

Wie in nachstehendem Beispiel 5 beschrieben, gibt es bei Verwendung des erfindungsgemäß hergestellten Sols überraschenderweise keine Enthaftung an umgeformten Bereichen. Durch den Einbau der Ti-Komponenten verbessert sich die Adhäsion und damit ist der geforderte Korrosionsschutz gewährleistet.

Vergleichende NMR-Spektren des Sols des Standes der Technik mit dem erfindungsmäßig hergestellten Sol ergaben unerwarteterweise, dass sich nach der Zugabe der Ti-Komponente, der Kondensationsgrad gegenüber dem Ausgangssystem reduziert. Ohne an eine bestimmte Theorie gebunden sein zu wollen, kann gesagt werden, dass durch die Verwendung der Titan-Komponente das Netzwerk ausgedehnt wird, wodurch die Flexibilität der Schicht erhöht wird. Die Erhöhung der Adhäsion kann durch eine Erhöhung der Anzahl unkondensierter freier Gruppen erklärt werden, welche mit der Metall- oder Glasoberfläche reagieren können.

### Schutzschichten auf Titanblechen

Dekorative Metalloberflächen aus Titan finden neuerdings im Innenbereich von Automobilen oder als Material für die Herstellung von anspruchsvollen Gebrauchsgegenständer vielseitige Verwendung. Sie zeichnen sich durch eine gute Korrosionsbeständigkeit aus. Ein Nachteil dieser Oberflächen ist die Empfindlichkeit gegen Fingerabdrücke, die häufig Oxidationsspuren hinterlassen. Das Aufbringen eines konventionellen Klarlackes, der nicht abrieb- und kratzfest ist, hinterlässt eine minderwertige Optik.

Eine Verbesserung der Fingerabdruckunempfindlichkeit wird durch fluorhaltige Metalloxid-Sole erzielt. Bekannte Verfahren unterdrücken die Antifingerprintempfindlichkeit aber nicht ausreichend. Ein weiterer Mangel ist, dass bei Einwirkung hoher Temperaturen giftige Fluorkohlenwasserstoffe freigesetzt werden.

Wie in nachstehendem Beispiel 6 beschrieben, konnte die Fingerabdruckempfindlichkeit von Substraten aus Titan unerwarteterweise durch eine nach dem erfindungsgemäßen Verfahren hergestellte Schutzschicht reduziert werden. Während bei Einbrenntemperaturen von 500 °C das Titan deutliche Anlauffarben bildet, eliminiert die bei dem erfindungsgemäß hergestellten Beschichtungssol mögliche Reduktion der Einbrenntemperatur auf 350 °C die Anlauffarbe vollständig bei gleichbleibend hervorragenden Antifingerprint-, Korrosionsschutz- und mechanischen Eigenschaften.

Die Erfindung wird durch die nachstehenden Beispiele weiter erläutert, die diese in keiner Weise beschränken sollen.

### Beispiele

### Synthesebeispiel 1

Schritt a) 593 g Tetraethoxysilan und 2032 g Methyltriethoxysilan werden in einem Kolben vorgelegt und unter Rühren nacheinander mit 36 g Natriumhydroxid und 49 g KOH versetzt. Die Mischung wird bis zum vollständigen Auflösen der Salze gerührt. Anschließend werden 290 ml Wasser in der dem Fachmann bekannten Weise so zugetropft, dass dabei eine Temperatur von 36 °C nicht überschritten wird.

Schritt b) Nach Beendigung der Wasser-Zugabe lässt man die Mischung abkühlen und es werden 900 g 2-Propanol hinzugefügt. Der jetzt mit 250 U/min gerührten Mischung werden langsam 117 g Tetrabutyltitanat (TBOT) zugetropft. Eine Ruhezeit vor Zugabe der Titanverbindung ist nicht erforderlich. Im Anschluss wird die Reaktionslösung für weitere 2 Stunden gerührt bevor ein beschichtungstaugliches Sol erhalten wird.

Das molare Verhältnis Ti/Si im Beschichtungssol beträgt 0,024/1.

### Vergleichs-Synthesebeispiel 1

593 g Tetraethoxysilan und 2032 g Methyltriethoxysilan werden in einem Kolben vorgelegt und unter Rühren nacheinander mit 36 g Natriumhydroxid und 49 g KOH versetzt. Die Mischung wird bis zum vollständigen Auflösen der Salze gerührt. Anschließend werden 290 ml Wasser in der dem Fachmann bekannten

Weise so zugetropft, dass dabei eine Temperatur von 36 °C nicht überschritten wird.

Nach Beendigung der Wasser-Zugabe lässt man die Mischung abkühlen und es werden 900 g 2-Propanol hinzugefügt. Der jetzt mit 250 U/min gerührten Mischung werden langsam 231,3 g Tetrabutyltitanat (TBOT) zugetropft. Eine Ruhezeit vor Zugabe der Titanverbindung ist nicht erforderlich. Im Anschluss wird die Reaktionslösung für weitere 2 Stunden gerührt bevor ein beschichtungstaugliches Sol erhalten wird.

Das molare Verhältnis Ti/Si im Beschichtungssol beträgt 0,048.

### Vergleichs-Synthesebeispiel 2

593 g Tetraethoxysilan und 2032 g Methyltriethoxysilan werden in einem Kolben vorgelegt und unter Rühren nacheinander mit 36 g Natriumhydroxid und 49 g KOH versetzt. Die Mischung wird bis zum vollständigen Auflösen der Salze gerührt. Anschließend werden 290 ml Wasser in der dem Fachmann bekannten Weise so zugetropft, dass dabei eine Temperatur von 36 °C nicht überschritten wird.

Nach Beendigung der Wasser-Zugabe lässt man die Mischung abkühlen und es werden 900 g 2-Propanol hinzugefügt. Der jetzt mit 250 U/min gerührten Mischung werden langsam 492 g Tetrabutyltitanat (TBOT) zugetropft. Eine Ruhezeit vor Zugabe der Titanverbindung ist nicht erforderlich. Im Anschluss wird die Reaktionslösung für weitere 2 Stunden gerührt bevor ein beschichtungstaugliches Sol erhalten wird.

Das molare Verhältnis Ti/Si im Beschichtungssol beträgt 0,10.

### Vergleichs-Synthesebeispiel 3

Analog zu Synthesebeispiel 1 werden Methyltriethoxysilan und Tetraethoxysilan in einem Kolben vorgelegt und mit Natriumhydroxid und Kaliumhydroxid versetzt. Nachdem sich das zugesetzte Alkalihydroxid vollständig aufgelöst hat wird dem Reaktionsgemisch langsam die in Synthesebeispiel 1 genannte Menge an Tetrabutyltitanat hinzugetropft. Unmittelbar nach Beginn der Hydrolyse (bei der Zugabe von Wasser) fällt das TiO₂ als weißer Niederschlag aus.

Es wird eine Mischung erhalten, die als Beschichtung untauglich ist.

### Synthesebeispiel 2 - Synthesebeispiel für pigmentiertes Sol

3200 g des gemäß Synthesebeispiel 1, Schritt a) hergestellen Sols werden nach Abkühlung mit 3186 g eines Lösungsgemisches, welches zu gleichen Gewichtsanteilen aus Ethanol, Isopropanol und 1-Butanol besteht, versetzt. Der jetzt mit 250 U/min gerührten Mischung werden langsam 288 g Tetrabutyltitanat (TBOT) zugetropft.

Die erhaltene Reaktionslösung wird für mindestens 30 Minuten gerührt.

Im Anschluss werden dieser Mischung 500 g eines aluminiumhaltigen Pigmentes (STAPA IL HYDROLAN S 2100 Eckart) innerhalb von 10 Minuten unter Rühren mit 250 U/min hinzugefügt. Die erhaltene Mischung wird mindestens 30 Minuten gerührt, bevor ein beschichtungsfähiges Sol erhalten wird.

Das molare Verhältnis Ti/Si im Beschichtungssol ist wie in Synthesebeispiel 1.

### Beispiel 1

Das gemäß Synthesebeispiel 1 hergestellte Beschichtungssol wurde mittels eines Sprühverfahrens auf ein Titansubstrat aufgebracht. Das Beschichtungssol kann wie im Synthesebeispiel 1 beschrieben ohne weitere Verdünnungsschritte (durch Zugabe von Lösungsmittel) appliziert werden.

Das mit dem Beschichtungssol nach Synthesebeispiel 1 beschichtete Titansubstrat wird in einem Wärmeschrank unter Standard Atmosphäre, d.h. Luft, mit einer Geschwindigkeit von 10 K/min auf 350°C geheizt und nach Erreichen der Temperatur für 30 min bei dieser Temperatur gehalten. Anschließend wird die Temperatur mit max. Geschwindigkeit auf mind. 200°C gekühlt, bevor die gehärteten Substrate aus den Ofen genommen werden können.

Die nach der Härtung erhaltene glasartige Schutzschicht ist rissfrei.

### Vergleichsbeispiel 1

Das gemäß Vergleichs-Synthesebeispiel 1 hergestellte Beschichtungssol wurde wie in Beispiel 1 mittels eines Sprühverfahrens auf ein Titansubstrat aufgebracht und das mit dem Beschichtungssol nach Vergleichs-Synthesebeispiel 1 beschichtete Titansubstrat wurde gemäß dem in Beispiel 1 beschriebenen Verdichtungsverfahren gehärtet.

Die nach der Härtung erhaltene glasartige Schutzschicht weist Risse auf.

### Vergleichsbeispiel 2

Das gemäß Vergleichs-Synthesebeispiel 2 hergestellte Beschichtungssol wurde wie in Beispiel 1 mittels eines Sprühverfahrens auf ein Titansubstrat aufgebracht und das mit dem Beschichtungssol nach Vergleichs-Synthesebeispiel 2 beschichtete Titansubstrat wurde gemäß dem in Beispiel 1 beschriebenen Verdichtungsverfahren gehärtet.

Die nach der Härtung erhaltene glasartige Schutzschicht weist Risse auf.

### Beispiel 2

Das gemäß Synthesebeispiel 1 hergestellte Beschichtungssol wurde mittels eines Sprühverfahrens auf ein Edelstahlsubstrat aufgebracht und gemäß dem in Beispiel 1 beschriebenen Verdichtungsverfahren gehärtet.

Die nach der Härtung erhaltene glasartige Schutzschicht ist rissfrei. Das Substrat zeigt nach der Härtung eine gewisse Anlauffarbe.

### Beispiel 3

Das gemäß Synthesebeispiel 1 hergestellte Beschichtungssol wurde wie in Beispiel 2 auf Edelstahlsubstrate aufgebracht. Die beschichteten Edelstahlsubstrate (Proben) werden einem zweistufigen Verdichtungsverfahren unterworfen.

Hierzu wird der mit den Proben bestückte Ofenraum auf 150-200°C geheizt. Nach Erreichen der Temperatur wird der Probenraum evakuiert bis ein Druck von mind. 10 mbar erreicht wird. Nach erfolgter Evakuierung wird mit N₂ geflutet und der Probenraum gespült, bis der Sauerstoffgehalt unter 800 ppm liegt. Dieser Wert kann alternativ auch durch mehrmaliges Sekurieren erreicht werden. Sobald der O₂-Wert unterhalb 800 ppm liegt und der Probenraum ausreichend mit Inertgas geflutet ist, wird die Temperatur mit einer Geschwindigkeit von 10 k/min auf 500°C angehoben. Die Zieltemperatur wird für 10 min gehalten. Anschließend wird die Temperatur mit max. Geschwindigkeit auf mind. 200°C gekühlt, bevor die gehärteten Substrate aus den Ofen genommen werden können.

Die nach der Härtung erhaltene glasartige Schutzschicht ist rissfrei. Das Substrat zeigt nach der Härtung so gut wie keine Anlauffarbe. Um bei Edelstahl-Substraten beim Härtungsschritt die Verfärbung des Substrates zu verringern, kann daher ein bei der Verdichtung ein Inertisierungsschritt eingefügt werden.

### Beispiel 4

Die Anhaftung von eingebrannten Standardlebensmitteln wird anhand eines Lebensmitteleinbrandtests geprüft. Diese eingesetzten Standardlebensmittel sind Aprikosenkonfitüre, Eigelb, Eiweiß, Olivenöl, Tomatenmark und Senf. Diese werden jeweils auf Blechsubstrate (Proben A, B und C wie nachstehend beschrieben) aufgetragen und bei einer Temperatur von 250°C für 10 min eingebrannt. Die Stellen an denen das Lebensmittel aufgetragen wurde, werden mechanisch mit einem weißen Schwamm, Spülmittel und warmem Wasser gereinigt und das Ergebnis beurteilt.

| | |
|---|---|
| Probe A: | emailliertes Substrat |
| Probe B: | emailliertes Substrat gemäß Probe A, bei dem ein Alkalisilikat-haltiges Beschichtungssol gemäß Beispiel 2 von DE 19714949 A1 auf die Emaille aufgetragen und in einem Einbrennschritt bei 500 °C analog Beispiel 4 von DE 19714949 A1 unter Bildung einer glasartigen Schicht mit der Emailleschicht verbunden wird |
| Probe C: | emailliertes Substrat gemäß Probe A, bei dem ein erfindungsgemäßes Beschichtungssol gemäß Synthesebeispiel 1 durch eine Sprühapplikation auf die Emailleschicht aufgetragen und in einem Einbrennschritt unter Bildung einer glasartigen Schicht (Ti-haltige Alkalisilikatschicht) mit dieser verbunden wird. Das Beschichtungssol wird im Einbrennschritt analog dem in Beispiel 1 beschriebenen Verdichtungsverfahren bei 350 °C ausgehärtet. |

Die erhaltenen Proben A, B und C wurden dann dem Lebensmitteleinbrandtest mit jeweils 6 Lebensmitteln unterzogen wie vorstehend beschrieben. Die Ergebnisse der getesteten Systeme sind in Tabelle 1 aufgeführt.

**Tabelle 1:**

| Probe | Aprikosenkonfitüre | Eigelb | Eiweiß | Olivenöl | Tomatenmark | Senf |
|---|---|---|---|---|---|---|
| A | - | --- | -- | - | - | - |
| B | ± | ± | ± | ± | ± | ± |
| C | ++ | ++ | ++ | +++ | +++ | +++ |

| | | | | | | |
|---|---|---|---|---|---|---|
| Legende: - /--/---: leichte/mittlere/starke Schädigung ±: keine Veränderung gegenüber Emaille; +/++/+++: leichte/mittlere/starke Verbesserung gegenüber dem Stand der Technik | | | | | | |

Wie aus Tabelle 1 ersichtlich, zeigen die erfindungsgemäßen Ti-haltigen Alkalisilikatschichten (Probe C) die besten Ergebnisse in allen durchgeführten Lebensmitteleinbrandtests. Im Gegensatz zur reinen Emailleoberfläche (Probe A), die in allen Tests deutlich geschädigt wurde, und im Vergleich zu einer Beschichtung (Probe B), die dem Stand der Technik entspricht, die im Vergleich zur Emailleoberfläche nur leicht verbesserte Eigenschaften aufweist, besteht die erfindungsgemäße Ti-haltige Alkalisilikatschicht alle Tests.

Durch die nach dem erfindungsgemäßen Verfahren bei einer Einbrenntemperatur von 350°C erhaltene Schutzschicht zeigen sich im Vergleich zu der reinen Emailleschicht und den mit dem Stand der Technik beschichteten Oberflächen die besten Ergebnisse.

### Beispiel 5

Nach dem Stand der Technik werden temperaturbelastete Bauteile (z.B. für den Automobilbereich) aus Edelstahl 1.4301 mit einem Alkalisilikat-Sol-Gel-System des Standes der Technik beschichtet, welches Aluminiumpigmente als farbgebendes Mittel enthält. Nach thermischer Aushärtung zeigte sich allerdings, dass sich diese Schichten unter bestimmten Bedingungen lokal ablösen. Diese lokalen Defekte treten besonders im Bereich von umgeformten Flächen auf, d.h. in Bereichen, in denen starke mechanische Kräfte zur Umformung eingesetzt wurden. Nach ersten Abplatzungen schreitet die Korrosion dann als Schichtkorrosion weiter voran und löst nach und nach immer neue Bereiche der Sol-Gel-Schicht ab.

In einem anderen Versuch werden die temperaturbelastete Bauteile aus Edelstahl 1.4301 gemäß dem erfindungsgemäßen Verfahren mit einem Beschichtungssol gemäß Synthesebeispiel 2, das die genannten Aluminiumpigmente als farbgebendes Mittel enthält, beschichtet und durch thermische Verdichtung gehärtet. Überraschenderweise gibt es mit der erfindungsgemäß hergestellten Schutzschicht keine Enthaftung an umgeformten Bereichen. Durch den Einbau der Ti-Komponenten verbessert sich die Adhäsion und damit ist der geforderte Korrosionsschutz gewährleistet.

Vergleichende NMR-Spektren des Sols des Standes der Technik mit dem erfindungsmäßig hergestellten Sol ergaben unerwarteter Weise, dass sich nach der Zugabe der Ti-Komponente der Kondensationsgrad gegenüber dem Ausgangssystem reduziert.

### Beispiel 6

Das gemäß Synthesebeispiel 1 hergestellte Beschichtungssol wurde auf Titansubstrate aufgebracht, um Proben zu erhalten. Die thermische Verdichtung der beschichteten Proben wurde zum einen bei einer Einbrenntemperatur von 350 °C wie in Beispiel 1 beschrieben und zum anderen analog, aber bei einer Einbrenntemperatur von 500 °C durchgeführt.

Unerwarteterweise konnte in beiden Fällen die Fingerabdruckempfindlichkeit des Titansubstrats durch Auftragung des Beschichtungssols gemäß dem erfindungsgemäßen Verfahren reduziert werden. Dabei wurde festgestellt, dass bei Einbrenntemperaturen von 500°C das Titan deutliche Anlauffarben bildet. Die bei der erfindungsgemäßen Zusammensetzung mögliche Reduktion der Einbrenntemperatur auf 350°C eliminiert die Anlauffarbe vollständig bei gleichbleibend hervorragenden Antifingerprint-, Korrosionsschutz- und mechanischen Eigenschaften.

## Patentansprüche

1. Verfahren zur Herstellung einer glasartigen Schutzschicht auf einem Metall- oder Glassubstrat oder einem vorbeschichteten Metall- oder Glassubstrat, umfassend
a) Mischen von einer oder mehreren Siliciumverbindungen der Formel (I)
RₙSiX₄₋ₙ (I)
worin R unabhängig Alkyl, Aryl, Alkaryl oder Arylalkyl ist, X unabhängig Alkoxy oder Acyloxy ist und n 0, 1 oder 2 ist, mit der Maßgabe, dass mindestens eine Siliciumverbindung der Formel (I) eingesetzt wird, worin n 1 oder 2 ist, mit NaOH und KOH,
b) Zugabe von Wasser zu der in Schritt a) erhaltenen Mischung zur Hydrolyse des oder der Siliciumverbindungen der Formel (I),
c) Zugabe von mindestens einer Verbindung der Formel (II)
MYₘ (II)
worin M Pb, Ti, Zr, Al oder B, vorzugsweise Ti, ist, Y unabhängig Alkoxy ist und m der Wertigkeit von M entspricht, wobei eine oder mehr Alkoxygruppen durch einen oder mehr Chelatbildner ersetzt sein können und/oder zwei Alkoxygruppen durch eine Oxogruppe ersetzt sein können,
zu der in Schritt b) erhaltenen hydrolysierten Mischung, wobei das molare Verhältnis M/Si im Bereich von 0,01/1 bis 0,04/1 liegt, wobei M die molare Menge an M in der mindestens einen Verbindung der Formel (II) ist und Si die molare Menge an Si in der mindestens einen Siliciumverbindung der Formel (I) ist, um ein Beschichtungssol zu erhalten,
d) Aufbringen des in Schritt c) erhaltenen Beschichtungssols auf das Metall- oder Glassubstrat oder das vorbeschichtete Metall- oder Glassubstrat und
e) thermisches Verdichten des in Schritt d) aufgebrachten Beschichtungssols bei einer Temperatur im Bereich von 300 °C bis 500 °C unter Bildung der glasartigen Schutzschicht.

2. Verfahren nach Anspruch 1,
wobei in der Siliciumverbindung der Formel (I) die Gruppe R aus C₁₋₄-Alkyl, insbesondere Methyl oder Ethyl, oder Phenyl ausgewählt ist und/oder die Gruppe X aus C₁₋₄-Alkoxy, insbesondere Methoxy oder Ethoxy, ausgewählt ist, und/oder
wobei in der Verbindung der Formel (II) die Gruppe Y aus C₁₋₈-Alkoxy, insbesondere C₁₋₄-Alkoxy, ausgewählt ist.

3. Verfahren nach Anspruch 1 oder Anspruch 2, wobei die eine oder die mehreren Siliciumverbindungen der Formel (I) mindestens eine Siliciumverbindung der Formel (I), worin n 1 oder 2, bevorzugt 1, ist, und mindestens eine Siliciumverbindung der Formel (I), worin n 0 ist, umfassen, wobei das molare Verhältnis der mindestens einen Siliciumverbindung der Formel (I), worin n 1 oder 2 ist, zu der mindestens einen Siliciumverbindung der Formel (I), worin n 0 ist, bevorzugt im Bereich von 1 bis 10, bevorzugt von 3 bis 5, liegt.

4. Verfahren nach irgendeinem der vorhergehenden Ansprüche, wobei das molare Verhältnis Si/(Na+K) im Bereich von 20 bis 7, bevorzugt von 15 bis 10, liegt, wobei Si die molare Menge an Si in der mindestens einen Siliciumverbindung der Formel (I) ist und (Na+K) die molare Gesamtmenge an Na und K in NaOH und KOH ist.

5. Verfahren nach irgendeinem der vorhergehenden Ansprüche, wobei das Metallsubstrat ausgewählt ist aus einem Substrat aus Stahl, insbesondere Edelstahl oder austenitischem Stahl, Aluminium, Aluminiumlegierung, Titan, Titanlegierung, Magnesium oder Magnesiumlegierung.

6. Verfahren nach irgendeinem der vorhergehenden Ansprüche, wobei das molare Verhältnis M/Si im Bereich von 0,015/1 bis 0,035/1, bevorzugt von 0,02/1 bis 0,03/1, bevorzugter 0,021/1 bis 0,03/1, liegt.

7. Verfahren nach irgendeinem der vorhergehenden Ansprüche, wobei das in Schritt b) zugegebene Wasser in einer Menge im Bereich von 0,2 bis 0,5 mol, bevorzugt von 0,3 bis 0,4 mol, pro mol an hydrolysierbaren Gruppen, die in der oder den Siliciumverbindungen der Formel (I) vorhanden sind, zugegeben wird.

8. Verfahren nach irgendeinem der vorhergehenden Ansprüche, wobei die Zugabe des Wassers in Schritt b) so erfolgt, dass die Temperatur der Mischung 40 °C nicht überschreitet, bevorzugt 36 °C nicht überschreitet.

9. Verfahren nach irgendeinem der vorhergehenden Ansprüche, wobei man die durch die Hydrolysereaktion erwärmte Mischung nach der Zugabe des Wassers auf eine Temperatur im Bereich von 15 bis 25 °C abkühlen lässt und gegebenenfalls mit einem organischen Lösungsmittel verdünnt, bevor gemäß Schritt c) mindestens eine Verbindung der Formel (II) zugegeben wird.

10. Verfahren nach irgendeinem der vorhergehenden Ansprüche, wobei dem Beschichtungssol oder einer Vorstufe davon mindestens ein Pigment, bevorzugt ein farbgebendes Pigment, und/oder mindestens ein Chelatbildner zugesetzt wird.

11. Verfahren nach irgendeinem der vorhergehenden Ansprüche, wobei das Beschichtungssol durch Sprühbeschichtung, elektrostatisches Sprühen, Tauchbeschichtung, Schleuderbeschichtung oder Coil Coating auf das Metall- oder Glassubstrat oder das vorbeschichtete Metall- oder Glassubstrat aufgebracht wird.

12. Verfahren nach irgendeinem der vorhergehenden Ansprüche, wobei die thermische Verdichtung bei einer Temperatur im Bereich von 300 °C bis 475 °C, bevorzugt von 325 °C bis 425 °C, besonders bevorzugt von 350 °C bis 375 °C, durchgeführt wird.

13. Verfahren nach irgendeinem der vorhergehenden Ansprüche, wobei die thermische Verdichtung zweistufig durchgeführt wird, wobei das aufgebrachte Beschichtungssol zunächst in einer Atmosphäre mit einem Sauerstoffgehalt von mindestens 1 Vol.-% auf eine Temperatur in einem Bereich von 150 bis 200 °C erwärmt wird und anschließend in einer Inertgasatmosphäre auf eine Temperatur im Bereich von 300 °C bis 500 °C erwärmt wird, wobei der Sauerstoffgehalt der Inertgasatmosphäre vorzugsweise unter 1000 ppm, bevorzugter unter 800 ppm, liegt.

14. Verfahren nach irgendeinem der vorhergehenden Ansprüche,
bei dem die glasartige Schutzschicht als einzige Beschichtung auf dem Metall- oder Glassubstrat oder auf einem mit einer Emailleschicht vorbeschichteten Metall- oder Glassubstrat aufgebracht wird oder
bei dem neben der glasartigen Schutzschicht eine oder mehrere weitere Beschichtungen auf dem Metall- oder Glassubstrat oder auf einem mit einer Emailleschicht vorbeschichteten Metall- oder Glassubstrat aufgebracht werden, wobei in diesem Fall die glasartige Schutzschicht bevorzugt die Grundschicht oder die Deckschicht ist, oder
bei dem unmittelbar über und unter der glasartigen Schutzschicht keine Beschichtung mit einer nach dem Sol-Gel-Verfahren hergestellten Beschichtungszusammensetzung aufgebracht wird.

15. Verfahren nach irgendeinem der vorhergehenden Ansprüche, wobei das Beschichtungssol auf einem Metall- oder Glassubstrat aufgebracht wird, das mit einer Emailleschicht vorbeschichtet ist.

16. Verfahren nach irgendeinem der vorhergehenden Ansprüche, wobei die Schichtdicke der glasartigen Schutzschicht nach der thermischen Verdichtung im Bereich von 2 bis 10 µm, bevorzugt von 4 bis 8 µm, liegt und/oder wobei die glasartige Schutzschicht im Wesentlichen anorganisch ist.

17. Metall- oder Glassubstrat mit einer glasartigen Schutzschicht, erhältlich nach einem Verfahren nach irgendeinem der Ansprüche 1 bis 16.

18. Verwendung der nach irgendeinem der Ansprüche 1 bis 16 erhaltenen glasartigen Schutzschicht als Korrosionsschutzschicht und/oder als Antifingerprintschicht und/oder als Antihaftschicht auf einem Metall- oder Glassubstrat.

## Claims

1. A method for producing a glass-like protective layer on a metal substrate or glass substrate or a pre-coated metal substrate or glass substrate, said method comprising the steps of
a) mixing one or more silicon compounds of formula (I)
RₙSiX₄₋ₙ (I)
where R is independently alkyl, aryl, alkaryl or arylalkyl, X is independently alkoxy or acyloxy, and n is 0, 1 or 2, with the proviso that at least one silicon compound of formula (I) is used, where n is 1 or 2,
with NaOH and KOH,
b) adding water to the mixture obtained in step a) to hydrolyse the silicon compound(s) of formula (I),
c) adding at least one compound of formula (II)
MYₘ (II)
where M is Pb, Ti, Zr, Al or B, preferably Ti, Y is independently alkoxy, and m corresponds to the valence of M, wherein one or more alkoxy groups may be replaced by one or more chelating agents and/or two alkoxy groups may be replaced by an oxo group,
to the hydrolysed mixture obtained in step b), wherein the molar ratio M/Si is in the range of 0.01/1 to 0.04/1, wherein M is the molar amount of M in the at least one compound of formula (II) and Si is the molar amount of Si in the at least one silicon compound of formula (I), to obtain a coating sol,
d) applying the coating sol obtained in step c) to the metal substrate or glass substrate or the pre-coated metal substrate or glass substrate, and
e) thermally compressing the coating sol applied in step d) at a temperature in the range of 300°C to 500°C to form the glass-like protective layer.

2. The method according to claim 1,
wherein in the silicon compound of formula (I) the group R is selected from C₁₋₄ alkyl, especially methyl or ethyl, or phenyl, and/or the group X is selected from C₁₋₄ alkoxy, especially methoxy or ethoxy, and/or wherein in the compound of formula (II) the group Y is selected from C₁₋₈ alkoxy, especially C₁₋₄ alkoxy.

3. The method according to claim 1 or claim 2, wherein the one or more silicon compounds of formula (I) comprise at least one silicon compound of formula (I), where n is 1 or 2, preferably 1, and at least one silicon compound of formula (I), where n is 0, wherein the molar ratio of the at least one silicon compound of formula (I) where n is 1 or 2 to the at least one silicon compound of formula (I) where n is 0 is preferably in the range of from 1 to 10, preferably from 3 to 5.

4. The method according to any one of the preceding claims, wherein the molar ratio Si/(Na+K) is in the range of 20 to 7, preferably of 15 to 10, wherein Si is the molar amount of Si in the at least one silicon compound of formula (I) and (Na+K) is the total molar amount of Na and K in NaOH and KOH.

5. The method according to any one of the preceding claims, wherein the metal substrate is selected from a substrate of steel, especially stainless steel or austenitic steel, aluminium, aluminium alloy, titanium, titanium alloy, magnesium or magnesium alloy.

6. The method according to any one of the preceding claims, wherein the molar ratio M/Si is in the range of 0.015/1 to 0.035/1, preferably of 0.02/1 to 0.03/1, more preferably 0.021/1 to 0.03/1.

7. The method according to any one of the preceding claims, wherein the water added in step b) is added in an amount in the range of 0.2 to 0.5 mol, preferably of 0.3 to 0.4 mol, per mol of hydrolysable groups present in the silicon compound(s) of formula (I).

8. The method according to any one of the preceding claims, wherein the addition of the water in step b) is such that the temperature of the mixture does not exceed 40°C, preferably does not exceed 36°C.

9. The method according to any one of the preceding claims, wherein the mixture heated by the hydrolysis reaction is allowed to cool to a temperature in the range of 15 to 25°C after the addition of the water and is optionally diluted with an organic solvent before at least one compound of formula (II) is added according to step c).

10. The method according to any one of the preceding claims, wherein at least one pigment, preferably a colouring pigment, and/or at least one chelating agent is added to the coating sol or a precursor thereof.

11. The method according to any one of the preceding claims, wherein the coating sol is applied by spray coating, electrostatic spraying, dip coating, spin coating or coil coating to the metal substrate or glass substrate or the pre-coated metal substrate or glass substrate.

12. The method according to any one of the preceding claims, wherein the thermal compression is carried out at a temperature in the range of 300°C to 475°C, preferably of 325°C to 425°C, especially preferably of 350°C to 375°C.

13. The method according to any one of the preceding claims, wherein the thermal compression is carried out in two stages, wherein the applied coating sol is first heated in an atmosphere having an oxygen content of at least 1 vol.% to a temperature in a range of 150 to 200°C and subsequently heated in an inert gas atmosphere to a temperature in a range of 300°C to 500°C, wherein the oxygen content of the inert gas atmosphere is preferably below 1000 ppm, more preferably below 800 ppm.

14. The method according to any one of the preceding claims,
in which the glass-like protective layer is applied as the only coating on the metal substrate or glass substrate or on a metal substrate or glass substrate precoated with an enamel layer, or
in which, in addition to the glass-like protective layer, one or more further coatings are applied to the metal substrate or glass substrate or to a metal substrate or glass substrate pre-coated with an enamel layer, wherein in this case the glass-like protective layer is preferably the base layer or the top layer, or
in which no coating with a coating composition prepared by the sol-gel process is applied immediately above and below the glass-like protective layer.

15. The method according to any one of the preceding claims, wherein the coating sol is applied to a metal substrate or glass substrate which is pre-coated with an enamel layer.

16. The method according to any one of the preceding claims, wherein the layer thickness of the glass-like protective layer after thermal compression is in the range of 2 to 10 µm, preferably of 4 to 8 µm, and/or wherein the glass-like protective layer is substantially inorganic.

17. A metal substrate or glass substrate having a glass-like protective layer obtainable by a method according to any one of claims 1 to 16.

18. Use of the glass-like protective layer obtained according to any one of claims 1 to 16 as an anti-corrosion layer and/or as an anti-fingerprint layer and/or as a non-stick layer on a metal substrate or glass substrate.

## Revendications

1. Procédé de fabrication d'une couche de protection vitreuse sur un substrat en métal ou en verre ou sur un substrat en métal ou en verre préenduit, comprenant
a) le mélange d'un ou plusieurs composés de silicium de formule (I)
RₙSiX₄₋ₙ (I)
dans laquelle R est un alkyle, un aryle, un alcaryle ou un arylalkyle indépendant, X est un alcoxy ou un acyloxy indépendant et n est 0, 1 ou 2, à condition qu'au moins un composé de silicium de la formule (I), dans laquelle n est 1 ou 2, soit utilisé,
avec NaOH et KOH,
b) l'ajout d'eau au mélange au mélange obtenu à l'étape a) pour hydrolyse du ou des composés de silicium de la formule (I),
c) d'ajout d'au moins un composé de la formule (II)
MYₘ (II),
dans laquelle M Pb, Ti, Zr, AI ou B, de préférence, Ti, est, Y est un alcoxy indépendant et m correspond à la valence de M, dans lequel un ou plusieurs groupes alcoxy peuvent être remplacés par un ou plusieurs agents chélatants et/ou deux groupes alcoxy peuvent être remplacés par un groupe oxo,
au mélange hydrolysé obtenu à l'étape b), dans lequel le rapport molaire M/Si se situe dans la plage de 0,01/1 à 0,04/1, dans lequel M est la quantité molaire de M dans l'au moins un composé de la formule (II) et Si est la quantité molaire de Si dans l'au moins un composé de silicium de la formule (I) pour obtenir un sol de revêtement,
d) l'application du sol de revêtement obtenu à l'étape c) sur le substrat en métal ou en verre ou sur le substrat en métal ou en verre préenduit et
e) le compactage thermique du sol de revêtement appliqué à l'étape d) à une température comprise entre 300 °C et 500 °C en formant la couche de protection vitreuse.

2. Procédé selon la revendication 1,
dans lequel, dans le composé de silicium de la formule (I), le groupe R est choisi parmi l'alkyle en C₁₋₄, en particulier le méthyle ou l'éthyle, ou le phényle, et/ou le groupe X est choisi parmi l'alcoxy en C₁₋₄, en particulier le méthoxy ou l'éthoxy, et/ou dans lequel, dans le composé de la formule (II), le groupe Y est choisi parmi l'alcoxy en C₁₋₈, en particulier l'alcoxy en C₁₋₄.

3. Procédé selon la revendication 1 ou la revendication 2, dans lequel les un ou plusieurs composés de silicium de formule (I) comprennent au moins un composé de silicium de la formule (I), dans laquelle n est 1 ou 2, de préférence est 1, et au moins un composé de silicium de formule (I), dans laquelle n est 0, dans lequel le rapport molaire de l'au moins un composé de silicium de la formule (I), dans laquelle n est 1 ou 2, sur l'au moins un composé de silicium de la formule (I), dans laquelle n est 0, se situe de manière préférée dans la plage de 1 à 10, de manière préférée de 3 à 5.

4. Procédé selon l'une quelconque des revendications précédentes, dans lequel le rapport molaire Si/(Na+K) se situe dans la plage de 20 à 7, de manière préférée de 15 à 10, dans lequel Si est la quantité molaire de Si dans l'au moins un composé de silicium de la formule (I) et (Na+K) est la quantité molaire totale de Na et K dans NaOH et KOH.

5. Procédé selon l'une quelconque des revendications précédentes, dans lequel le substrat en métal est choisi parmi un substrat en acier, en particulier en acier inoxydable ou en acier austénitique, en aluminium, en alliage d'aluminium, en titane, en alliage de titane, en magnésium ou en alliage de magnésium.

6. Procédé selon l'une quelconque des revendications précédentes, dans lequel le rapport molaire M/Si se situe dans la plage de 0,015/1 à 0,035/1, de manière préférée de 0,02/1 à 0,03/1, de manière préférée de 0,021/1 à 0,03/1.

7. Procédé selon l'une quelconque des revendications précédentes, dans lequel l'eau ajoutée à l'étape b) est ajoutée en une quantité dans la plage de 0,2 à 0,5 mol, de manière préférée de 0,3 à 0,4 mol, par mol de groupes hydrolysables, qui sont présents dans le ou les composés de silicium de la formule (I).

8. Procédé selon l'une quelconque des revendications précédentes, dans lequel l'ajout de l'eau à l'étape b) est effectué de telle sorte que la température du mélange ne dépasse pas 40 °C, de manière préférée ne dépasse pas 36 °C.

9. Procédé selon l'une quelconque des revendications précédentes, dans lequel on laisse refroidir le mélange chauffé par la réaction d'hydrolyse après l'ajout de l'eau à une température dans la plage de 15 à 25 °C et, le cas échéant, on le dilue avec un solvant organique avant d'ajouter selon l'étape c) au moins un composé de la formule (II).

10. Procédé selon l'une quelconque des revendications précédentes, dans lequel au moins un pigment, de manière préférée un pigment colorant, et/ou au moins un agent chélateur sont ajoutés au sol de revêtement ou à son précurseur.

11. Procédé selon l'une quelconque des revendications précédentes, dans lequel le sol de revêtement est appliqué sur le substrat en métal ou en verre ou sur le substrat en métal ou en verre préenduit par revêtement par pulvérisation, pulvérisation électrostatique, revêtement par immersion, revêtement centrifuge ou revêtement en continu.

12. Procédé selon l'une quelconque des revendications précédentes, dans lequel la compression thermique est réalisée à une température dans la plage de 300 °C à 475 °C, de manière préférée de 325 °C à 425 °C, de manière particulièrement préférée de 350 °C à 375 °C.

13. Procédé selon l'une quelconque des revendications précédentes, dans lequel la compression thermique est mise en œuvre en deux étapes, dans lequel le sol de revêtement appliqué est d'abord chauffé dans une atmosphère avec une teneur en oxygène d'au moins 1 % en volume à une température dans une plage de 150 à 200 °C, puis est chauffé dans une atmosphère de gaz inerte à une température dans une plage de 300 °C à 500 °C, dans lequel la teneur en oxygène de l'atmosphère de gaz inerte est de préférence inférieure à 1000 ppm, de préférence inférieure à 800 **ppm.**

14. Procédé selon l'une quelconque des revendications précédentes, où la couche de protection vitreuse est appliquée en tant que revêtement unique sur le substrat en métal ou en verre ou sur un substrat en métal ou en verre préenduit d'une couche d'émail ou où, outre la couche de protection vitreuse, une ou plusieurs autres couches sont appliquées sur le substrat en métal ou en verre ou sur un substrat en métal ou en verre préenduit d'une couche d'émail, dans lequel, dans ce cas, la couche de protection vitreuse est de manière préférée la couche de base ou la couche de finition, ou
où aucun revêtement avec une composition de revêtement fabriquée selon le procédé sol-gel n'est appliqué directement au-dessus et en dessous de la couche de protection vitreuse.

15. Procédé selon l'une quelconque des revendications précédentes, dans lequel le sol de revêtement est appliqué sur un substrat en métal ou en verre qui est préenduit d'une couche d'émail.

16. Procédé selon l'une quelconque des revendications précédentes, dans lequel l'épaisseur de couche de la couche de protection vitreuse après la compression thermique se situe dans la plage de 2 à 10 µm, de préférence de 4 à 8 pm, et/ou dans lequel la couche de protection vitreuse est sensiblement inorganique.

17. Substrat en métal ou en verre avec une couche de protection vitreuse, pouvant être obtenu selon un procédé selon l'une quelconque des revendications 1 à 16.

18. Utilisation de la couche de protection vitreuse obtenue selon l'une quelconque des revendications 1 à 16 en tant que couche de protection anticorrosion et/ou en tant que couche anti-traces de doigts et/ou en tant que couche antiadhésive sur un substrat en métal ou en verre.
